# EUROPEAN PATENT SPECIFICATION

(11) **EP 1 325 082 B1**
(45) Date of publication and mention of the grant of the patent: **04.08.2004**
(21) Application number: 01983516.4
(22) Date of filing: 28.09.2001
(51) Int. Cl.: C08L 95/00, C08K 5/20

(54) **BITUMINOUS COMPOSITION WITH IMPROVED "WALK-ON-ABILITY" AND ITS USE IN ROOFING APPLICATIONS**
BITUMINÖSE ZUSAMMENSETZUNGEN MIT VERBESSERTER BEGEHBARKEIT UND DEREN VERWENDUNG IM DACHBAHNENBEREICH
COMPOSITION BITUMINEUSE PRESENTANT UNE APTITUDE AU PIETINEMENT AMELIOREE, ET SON UTILISATION DANS DES APPLICATIONS DE COUVERTURE

(30) Priority: 28.09.2000 EP 00308546
(43) Date of publication of application: 09.07.2003
(73) Proprietor: Kraton Polymers Research B.V., 1030 BH Amsterdam (NL)
(72) Inventor: HEIMERIKX, Gerardus, Wilhelmus, Jozef, NL-1031 CM Amsterdam (NL); TROMMELEN, Erik, Adrianus, Theunis, NL-1031 CM Amsterdam (NL)
(74) Representative: Kortekaas, Marcel C. J. A.
(86) International application number: PCT/EP2001/011305
(87) International publication number: WO 2002/026889

(56) References cited:
- EP-A- 0 728 814

## Description

### Summary of the Invention

The present invention concerns bituminous compositions having advantageous high and low temperature properties which are maintained over time giving an improved estimated service life when used in, for example, roofing applications.

### Background to the Invention

A major proportion of the roofing felts applied nowadays are made of modified bituminous compositions, e.g., bituminous compositions comprising a bitumen component and an elastomer component, typically a styrenic block copolymer such as SBS (polystyrene-polybutadiene-polystyrene) SEBS (polystyrene-poly[ethylene-butylene]-polystyrene); SIS (polystyrene-polyisoprene-polystyrene) and SEPS (polystyrene-poly[ethylene-propylene]-polystyrene) and the like. Advantages of modified bituminous compositions over traditional systems (blown bitumen) include: improved fatigue resistance (the accommodation of repeated thermal movements of the roof); improved flexibility (especially at low temperature, enabling contractors to lay felt under colder weather conditions than with conventional bitumen); improved strength (to allow a reduction in the number of plies of felt by replacing in whole or part the traditional blown bitumen coated system); improved resistance to (permanent) deformation at short and longer loading times (so-called 'walk-on-ability'); and improved elasticity, resulting in a greater capacity to bridge movement of crack and joints.

Although modified bituminous compositions satisfy all of the above requirements in as much as these materials having excellent high and low temperature properties (i.e. cold bending resistance at -30 to -25 °C and flow resistance at 80 to 100 °C), improvement is still desired.

A property of particular importance in roofing applications is the walk-on-ability mentioned before. In case of inadequate walk-on-ability, torching, which is one of the most widely used application methods for bituminous roofing felts, could lead to undesired surface effects and/or damage due to insufficient resistance to deformation. An assessment of the resistance of a composition to withstand such working traffic is currently ranked by the penetration value (ASTM D5-94) at 50 °C. A reduction in PEN value, i.e. improving the resistance to deformation, whilst maintaining the performance properties and especially the low temperature properties would be highly desirous.

It has now been found that walk-on-ability of modified bituminous compositions may be improved without (significant) effect on the other performance properties of the compositions. As a result, modified bituminous compositions with an improved balance of properties are now available. Alternatively, modified bituminous compositions may now be made of relatively soft bitumen, that would otherwise have insufficient walk-on-ability (too high PEN value).

### Brief description of the Invention

Accordingly, the present invention provides a bituminous composition, which comprises a bituminous component (A), an elastomer component (B), preferably a block copolymer of a conjugated diene and a monovinylaromatic hydrocarbon, and an additive (C), wherein the additive is a compound of the general formula

Ar---R---Ar (I)

wherein each "Ar" independently is a benzene ring or fused aromatic ring system of 6 to 20 carbon atoms, substituted by at least one hydroxyl group, and "R" is an optionally substituted divalent radical comprising 6 to 20 atoms in the backbone and at least one amide and/or ester group in the backbone.

### Detailed description of the Invention

The components of the bituminous composition will be described hereafter.

### Additive

The additive used in the present invention is a compound of the general formula

Ar---R---Ar (I)

wherein each "Ar" independently is a benzene ring or fused aromatic ring system of 6 to 20 carbon atoms, substituted by at least one hydroxyl group, and "R" is an optionally substituted divalent radical comprising 6 to 20 atoms in the backbone and at least one amide and/or ester group in the backbone.

Suitably, each "Ar" is a benzene ring or a fused aromatic ring system of 6 to 10 carbon atoms, preferably a benzene ring. The benzene ring or fused aromatic ring system is substituted by at least one hydroxyl group, although more hydroxyl groups may be present. Suitably, the hydroxyl group or one of the hydroxyl groups is substituted in the para, or 4- position. In addition, each "Ar" may independently carry one or more substitutents, preferably alkyl groups of 1 to 10 carbon atoms, most preferably at a position or positions adjacent to hydroxyl group(s). Most suitably, both "Ar" are 3,5-dialkyl-4-hydroxylphenyl groups, preferably 3,5-di-tert-butyl-4-hydroxylphenyl groups.

The divalent radical "R" may be represented by the general formula

∼∼∼[C(=O)X]ₙ∼∼∼ (II)

wherein "C(=O)X" represents an amide or ester group, "X" being an oxygen or nitrogen atom, preferably an amide group; and "n" the number of such groups. These groups, in case "n" equals 2 or more, may be adjacent to each other but need not be. Suitably, "n" may vary from 1 to 4. Preferably "n" is 2 or 4, most preferably 2. Preferred examples of radical "R" include

-R¹XC(=O)C(=O)XR¹- (III)

-R¹XC(=O)-R²-C(=O)XR¹- (IV)

-R¹C(=O)X-R²-XC(=O)R¹- (V),

and

-R¹XC(=O)-R²-XC(=O)R¹- (VI),

wherein "R¹" is a C₁₋₄ hydrocarbonylene group, preferably an ethylene group; "X" is as defined above; and "R²" is an organic bridging group of 1 to 10 atoms in its backbone or a substituted organic bridging group of 1 to 10 atoms in its backbone, such as a C₁₋₁₀ hydrocarbonylene group, preferably a n-hexylene group, or a group of such length containing two amide or ester groups, preferably amide groups in its bridge.

In case "R²" is substituted, then it may be substituted with one or more of a variety of substituents, including alkaryl groups carrying an "Ar" group, and the like.

The preferred additive may hence be selected from, e.g., IRGANOX MD-1024; IRGANOX 1098; IRGANOX 259 or NAUGARD XL-1 and the like (IRGANOX AND NAUGARD are trademarks). Also a combination of such additives may be used. The most preferred additive is bis(3,5-ditertbutyl-4-hydroxyphenylethylamino)dicarbonic acid amide, available as MD-1024 from Ciba-Geigy.

The additive may be added in any amount in the range of 0.01 to 5 %wt, typically in an amount of 0.1 to 2 %wt, based on total bituminous composition. The preferred amount depends on e.g. (I) the selected additive(s); (II) the ratio of elastomer component (B) versus bitumen component (A); (III) the nature of elastomer component (B) and of bitumen component (A); and (IV) the presence of other components, such as fillers. Nonetheless, little experimentation will be required to find a suitable amount of additive to improve the overall balance of properties of the bituminous composition.

### Bitumen

The bituminous component present in the bituminous compositions according to the present invention may be a naturally occurring bitumen or derived from a mineral oil. Also petroleum pitches obtained by a cracking process and coal tar can be used as the bituminous component as well as blends of various bituminous materials. Examples of suitable components include distillation or "straight-run bitumens", precipitation bitumens, e.g. propane bitumens, blown bitumens, e.g. catalytically blown bitumen or multigrade, and mixtures thereof. Other suitable bituminous components include mixtures of one or more of these bitumens with extenders (fluxes) such as petroleum extracts, e.g. aromatic extracts, distillates or residues, or with oils. Suitable bituminous components (either "straight-run bitumens" or "fluxed bitumens") are those having a penetration of in the range of from 20 to 280 in particular from 50 to 250 dmm at 25 °C ("dmm" = 0.1 mm). Generally a straight run or distilled bitumen having a penetration in the range of from 100 to 250 dmm will be the most convenient to use. Within the scope of the invention, bitumens of different level of compatibility may be used.

### Elastomer

The bituminous composition according to the invention contains at least one elastomer component (B). Elastomers are generally associated with polymers of dienes, such as butadiene or isoprene, or with copolymers of such dienes with a monovinylaromatic hydrocarbon, such as styrene. It is emphasized that the elastomer used in the composition of the invention is not restricted to such polymers or copolymers. Suitable elastomers include polyesters, polyacrylates, polysulfides, polysilicones and polyesteramides, provided they show an elastomer behaviour.

Preferably, at least one block copolymer comprising at least two terminal blocks of a poly(monovinylaromatic hydrocarbon) and at least one block of one or more conjugated dienes or a (partially) hydrogenated version thereof is used as elastomer component. Suitable conjugated dienes are those with from 4 to 8 carbon atoms per monomer, for example butadiene, 2-methyl-1,3-butadiene (isoprene), 2,3-dimethyl-1,3-butadiene, 1,3-pentadiene and 1,2-hexadiene, in particular butadiene and isoprene, and mixtures thereof. Suitable monovinylaromatic hydrocarbons are o-methyl styrene, p-methyl styrene, p-tert-butylstyrene, 2,4-dimethylstyrene, α-methylstyrene, vinyl naphthalene, vinyl toluene, vinyl xylene, and the like or mixtures thereof, and in particular styrene.

These block copolymers may be linear or branched, and symmetric or asymmetric. A -preferred- example of a suitable block copolymer is the triblock copolymer of the configuration A-B-A, in which "A" represents a polyvinylaromatic hydrocarbon block, and "B" represents a polydiene block. These block copolymers may be further defined e.g. by the content of monovinylaromatic hydrocarbons in the final block copolymer, their molecular weight and their microstructure, as discussed hereinafter.

The content of monovinylaromatic hydrocarbons of the final block copolymer suitably ranges from 10 to 70, more preferably from 20 to 50 %wt (based on the total block copolymer).

The polymer blocks of monovinylaromatic hydrocarbons ("A") advantageously have an apparent molecular weight in the range from 2,000 to 100,000, in particular from 5,000 to 50,000. The polymer blocks of conjugated dienes ("B") preferably have an apparent molecular weight in the range of from 25,000 to 1,000,000, particularly from 30,000 to 150,000.

With the term "apparent molecular weight" as used throughout the specification is meant the molecular weight of the polymer (block), as measured with gel chromatography (GPC) using polystyrene calibration standards (according to ASTM 3536).

Through modification of the polymerization, it is possible to direct the conjugated dienes to propagate in a manner wherein the carbon atoms of a single unsaturated bond are incorporated in the backbone, or in a manner wherein all carbon atoms of the unsaturated conjugated bonds are incorporated in the backbone. With respect to the former manner, poly(conjugated dienes) are defined by their vinyl content, referring to the unsaturated bond that is now attached alongside the polymer backbone.

Techniques to enhance the vinyl content of the conjugated diene portion are well known and may involve the use of polar compounds such as ethers, amines and other Lewis bases and more in particular those selected from the group consisting of dialkylethers of glycols. Most preferred modifiers are selected from dialkyl ether of ethylene glycol containing the same or different terminal alkoxy groups and optionally bearing an alkyl substituent on the ethylene radical, such as monoglyme, diglyme, diethoxyethane, 1,2-diethoxypropane, 1-ethoxy-2,2-tert-butoxyethane, of which 1,2-diethoxypropane is most preferred.

Suitably, the total vinyl content of the block copolymer is at least 6 %wt (based on the blocks of poly(conjugated diene)), preferably in the range of from 8 to 80, more preferably in the range of from 25 to 55 %wt.

The preparation of block copolymers is known in the art. In GB1538266 a number of methods are described. For example, block copolymers may be prepared by coupling at least two diblock copolymer molecules together, using suitable coupling agents such as adipates (e.g., diethyl adipate) or silicon-compounds (e.g., silicon tetrachloride, dimethyldichlorosilane, methyldichlorosilane or gamma-glycidoxypropyltrimethoxysilane) or a nucleus prepared by oligomerization of di- or tri-vinyl benzene. Other coupling agents can be selected from polyepoxides, such as epoxidized linseed oil, or epoxidized bisphenols (e.g. the diglycidylether of bisphenol A), polyisocyanates (e.g., benzo-1,2,4-triisocyanate), polyketones (e.g., hexane-1,3,6-trione), polyanhydrides or polyhalides (e.g., dibromoethane) and the like.

Using coupling agents, a residue of uncoupled diblock copolymer may remain in the final product, referred to as the "diblock content". Where the block copolymer is prepared via a technique where no diblock is specifically prepared or isolated, such as in full sequential preparation, it is known that the final amount of diblock can be adjusted e.g. by reinitiation. The diblock content may for instance be in the range of from 5 to 25 %wt and more preferably from 10 to 25 %wt, based on the elastomer component.

The hydrogenation of the block copolymer, if desired, may be carried out as described in the above British Patent Specification. Further examples of suitable block copolymers, and their preparation, may be found for instance in EP0006674; EP0238149; EP0667886; EP0317025; EP0506195; EP0756611; US5189083; US5212220; US5141986; US544775; US5451619; US5718752; US5854335; US5798401; US3231635; US3251905; US3390207; US3598887; US4219627; EP0413294; EP0387671; EP0636654; and W00422931.

Elastomer component (B) is suitably present in the bituminous composition in an amount in the range of from 2 to 20, more preferably from 10 to 15 %wt (based on the total bituminous composition).

### Additional components

The bituminous composition may also, optionally, contain other ingredients such as may be required for the end-use envisaged. Thus fillers may be included, for example talc, calcium carbonate and carbon black. Other components that may be incorporated include resins, oils, stabilisers or flame retardants. The content of such fillers and/or other components may be in the range of from 0 to as much as 40 %wt(based on the total bituminous composition). Of course, if advantageous, other polymer modifiers may also be included in the bituminous composition of the invention.

The useful low temperature and high temperature properties of the polymer-bitumen blends of the present invention coupled with the improved ageing resistance enables such blends to be of significant benefit in uses where the blends are exposed to external weather conditions, such as use in roofing applications, for example as a component of roofing felt. The usefully low high-temperature viscosity not just means that the polymer-bitumen blends can be more easily processed but also means that they enable a greater amount of filler to be incorporated before the maximum allowable processing viscosity is achieved, and thus leads to a cheaper product in those applications where fillers are commonly used.

The bituminous compositions of the present invention may also be applied in respect of end-uses other than roofing applications, such as sealants and coating (e.g. pipe coating), road constructions, sound deadening materials, bitumen-based adhesives and the like.

The following Examples illustrate the present invention.

### Examples

### Bituminous compositions

Master batches with 12 %wt KRATON D-1184 (a commercial SBS grade, having an apparent radial MW of 420,000 g/mol, a diblock MW of 120,000 g/mol a PSC of 30 %wt and a vinyl content of 8 %wt) in two types of commercially available bitumen, i.e. B 45/60, and B 160/210, were made with a Silverson L4R high shear mixer. The bitumen was heated to 160 °C and subsequently the polymer was added. Upon blending, the temperature increased to 180 °C, which is caused by the energy input from the mixer. Blending at this temperature was continued until a homogeneous blend was obtained which was monitored by fluorescence microscopy.

With these master batches bituminous compositions were prepared using the other ingredients under low shear stirring at a temperature of 180 °C.

### Test methods

**A standard evaluation** on the blends without filler, i.e. the determination of softening point, viscosity, DIN flow resistance and cold bend, was carried out.

**The penetration at 50 °C** of each composition in this study was also determined. The load applied on the surface of a composition during a penetration measurement calculated is as follows:
* the cone tip diameter of the needle used is 0.15 mm (as reported in the calibration report and defined in ASTM D5-94);
* the surface of the needle (0.25 x *π* x d²) is 0.0177 mm²;
* the total load applied during the measurement, i.e. the weight (50 g) and bar, amounts 100 g.

Therefore, the actual load is: 100 ö 0.0177 = 5650 g/mm² = 56500 kPa.

The indentation and resilience is determined as follows:
If the surface of an average shoe size is 210 cm² (30 x 7 cm) and the weight of an average person is 80 kg, the load which is exerted on the roof (80 ö 210 = 0.394 kg/cm²) is 38 kPa.

The experiments were carried out on the compositions in penetration cups. On the surface of the composition a round flat metal cylinder was placed with a diameter of 1.3 cm. In this study the indentation tests have been carried out by applying two different loads, i.e. 0.5 kg and 1 kg. The actual loads exerted upon the compositions are therefore: 38 kPa and 76 kPa.

**Creep tests** were done for each composition at 50 °C applying various loads. The creep test was performed with a Haake RT20 Rotoviscometer using a parallel plate configuration. The diameter of the upper plate was 8 mm, while the distance between the plates was 1 mm. The initial thickness of the samples used amounted 1.5 mm. Before the start of the measurement the samples were trimmed. The creep tests were carried out applying a constant load of 40 kPa, 20 kPa, 10 kPa or 5 kPa. The compliance J (1/Pa) as a function of time has been determined for each composition.

### Experiments 1-5

IRGANOX MD-1024 was used in this study to investigate its effect on the penetration of typical roofing composition based on standard D-1184 SBS and 30 %wt filler.

### Results

The results of the penetration tests at 50 °C are given in the Table. The penetration values of the reference composition without the additives present is given for comparison reasons. Furthermore, the typical performance properties of a composition with bitumen B45/60 are also given for comparison reasons.

**TABLE**

| Experiment No. | A | 1 | 2 | 3 | B |
|---|---|---|---|---|---|
| MD-1024, %wt | nil | 0.1 | 0.3 | 0.5 | nil |
| Bitumen (B160/210 or) | | | | | B45/60 |
| Pen at 50 °C, dmm | 94 | 99 | 82 | 67 | 66 |
| Indent 50 °C, 38 kPa, dmm | 36 | 32 | 12 | 9 | |
| Indent 50 °C, 76 kPa, dmm | 69 | 60 | 26 | 16 | |
| R&B, °C | 124 | 125 | 123 | 122 | 134 |
| Visco, 180 °C, Pa.s | | | | | |
| 20 s⁻¹ | 5.2 | 4.9 | 5.9 | 6.6 | 8.1 |
| 100 s⁻¹ | 3.7 | 3.9 | 4.6 | 5.6 | 8.5 |
| Cold bend, °C pass | -35 | -35 | -40 | -40 | -5 |
| Flow, °C pass | 95 | 95 | 95 | 95 | 110 |

### Conclusion:

The presence of MD-1024 significantly affects the penetration of the composition at 50 °C. It is also demonstrated that the quantity of the additive influences the level of penetration.

It is demonstrated that with 0.5 %wt MD-1024 present in a composition with the softer B160/210 bitumen a similar penetration value at 50 °C is obtained in comparison with that found for a composition with the harder B45/60 bitumen, while significantly better overall performance properties are found for the composition with the softer bitumen.

The penetration at 50 °C was reduced significantly, which suggests that the level of indentation should be improved as well.

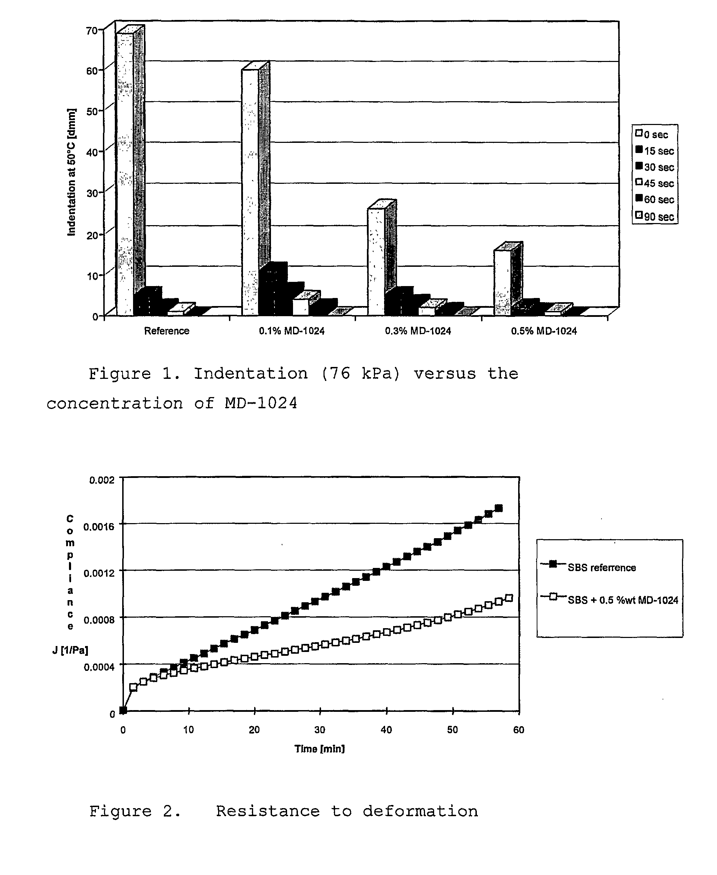

The results of the indentation and resilience of the compositions with D-1184 in B160/210 bitumen, filler and additive applying an excessive load of 76 kPa are reported in Figure 1. The results for the reference composition, i.e. without additive present are also given.

A major improvement of the level of indentation has been established with the presence of the additive, without affecting the resilience. In each case a total recovery within 120 seconds has been observed.

With the creep test the resistance to deformation has been determined at 40 kPa at a temperature of 50 °C. The results for each composition (B160/210) as reported in Table 1 are given in Figure 2. With the presence of the additives the resistance to deformation was improved significantly.

If 0.3 %wt or even more pronounced 0.5 %wt MD-1024 is incorporated in a typical roofing composition the walk-on-ability, i.e. penetration, indentation and resilience and resistance to deformation, can be improved substantially.

## Claims

1. A bituminous composition, which comprises a bituminous component (A), an elastomer component (B), preferably a block copolymer of a conjugated diene and a monovinylaromatic hydrocarbon, and an additive (C), wherein the additive is a compound of the general formula
Ar---R---Ar (I)
wherein each "Ar" independently is a benzene ring or fused aromatic ring system of 6 to 20 carbon atoms, substituted by at least one hydroxyl group, and "R" is an optionally substituted divalent radical comprising 6 to 20 atoms in the backbone and at least one amide and/or ester group in the backbone.

2. The composition of claim 1, wherein each "Ar" is a benzene ring or a fused aromatic ring system of 6 to 10 carbon atoms, preferably a benzene ring.

3. The composition of claim 1 or 2, wherein the benzene ring or fused aromatic ring system is substituted by at least one hydroxyl group

4. The composition of any one of claims 1-3, wherein the hydroxyl group or one of the hydroxyl groups is substituted in the para, or 4- position.

5. The composition of any one of the preceding claims, wherein each "Ar" may independently carry one or more substitutents, preferably alkyl groups of 1 to 10 carbon atoms, most preferably at a position or positions adjacent to hydroxyl group(s).

6. The composition of any one of the preceding claims, wherein both "Ar" are 3,5-dialkyl-4-hydroxylphenyl groups, preferably 3,5-di-tert-butyl-4-hydroxylphenyl groups.

7. The composition of any one of the preceding claims, wherein the divalent radical "R" is represented by the general formula
∼∼∼ [C(=O)X]ₙ∼∼∼ (II)
wherein "C(=O)X" represents an amide or ester group, "X" being an oxygen or nitrogen atom, preferably an amide group; and "n" the number of such groups.

8. The composition of claim 7, wherein "n" varies from 1 to 4.

9. The composition of claim 7, wherein "R" is one of the formulae
-R¹XC(=O)C(=O)XR¹- (III)
-R¹XC(=O)-R²-C(=O)XR¹- (IV)
-R¹C(=O)X-R²-XC (=O)R¹- (V),
and
-R¹XC(=O)-R²-XC(=O)R¹- (VI),
wherein "R¹" is a C₁₋₄ hydrocarbonylene group, preferably an ethylene group; "X" is as defined; and "R²" is an organic bridging group of 1 to 10 atoms in its backbone or a substituted organic bridging group of 1 to 10 atoms in its backbone, such as C₁₋₁₀ hydrocarbonylene group, preferably an n-hexylene group, or a group of such length containing two amide or ester groups, preferably amide groups in its bridge.

10. The composition of claim 1, wherein the additive is bis(3,5-ditertbutyl-4-hydroxyphenylethylamino)dicarbonic acid amide (available as MD-1024 from Ciba-Geigy).

11. The composition of any one of the preceding claims, wherein the additive is added in an amount in the range of 0.01 to 5 %wt, based on the total bituminous composition.

12. The composition of any one of the preceding claims, wherein the bituminous component is a naturally occurring bitumen or derived from a mineral oil.

13. The composition of any one of the preceding claims, wherein the bituminous component is selected from "straight-run bitumens", precipitation bitumens, blown bitumens, and mixtures thereof.

14. The composition of any one of the preceding claims, wherein the bitumenous component has a penetration of in the range of from 50 to 250 dmm at 25 °C.

15. The composition of any one of the preceding claims, wherein the block copolymer used as elastomer component (B) comprises at least two terminal blocks of a poly(monovinylaromatic hydrocarbon) and at least one block of one or more conjugated dienes or a (partially) hydrogenated version thereof.

16. The composition of claim 15, wherein the conjugated diene is selected from those with from 4 to 8 carbon atoms per monomer, for example butadiene, 2-methyl-1,3-butadiene (isoprene), 2,3-dimethyl-1,3-butadiene, 1,3-pentadiene and 1,2-hexadiene, in particular butadiene and isoprene, and mixtures thereof.

17. The composition of claims 15 or 16, wherein the monovinylaromatic hydrocarbon is selected from o-methyl styrene, p-methyl styrene, p-tert-butylstyrene, 2,4-dimethylstyrene, α-methylstyrene, vinyl naphthalene, vinyl toluene, vinyl xylene, and the like or mixtures thereof, and in particular styrene.

18. The composition of any one of claims 15-17, wherein the block copolymer is linear or branched, and symmetric or asymmetric.

19. The composition of any one of claims 15-18, wherein the content of monovinylaromatic hydrocarbons of the final block copolymer suitably ranges from 10 to 70, more preferably from 20 to 50 %wt (based on the total block copolymer).

20. The composition of any one of claims 15-19, wherein the polymer blocks of monovinylaromatic hydrocarbons ("A") have an apparent molecular weight in the range from 2,000 to 100,000, in particular from 5,000 to 50,000, and the polymer blocks of conjugated dienes ("B") have an apparent molecular weight in the range of from 25,000 to 1,000,000, particularly from 30,000 to 150,000.

21. The composition of any one of claims 15-20, wherein the total vinyl content of the block copolymer is at least 6 %wt (based on the blocks of poly(conjugated diene)), preferably in the range of from 8 to 80, more preferably in the range of from 25 to 55 %wt.

22. The composition of any one of the preceding claims, wherein elastomer component (B) is present in the bituminous composition in an amount in the range of from 2 to 20, more preferably from 10 to 15 %wt (based on the total bituminous composition).

23. The composition of any one of the preceding claims, wherein the bituminous composition contains fillers, for example talc, calcium carbonate and carbon black, and/or other components including resins, oils, stabilisers or flame retardants.

24. The use of the composition of any one of the preceding claims, in roofing applications.

## Patentansprüche

1. Bituminöse Zusammensetzung, umfassend einen bituminösen Bestandteil (A), einen Elastomerbestandteil (B), vorzugsweise ein Blockcopolymer aus einem konjugierten Dien und einem monovinylaromatischen Kohlenwasserstoff und einen Zusatzstoff (C), wobei der Zusatzstoff eine Verbindung der allgemeinen Formel
Ar---R---Ar (I)
ist, wobei jedes "Ar" unabhängig voneinander einen Benzolring oder ein kondensiertes aromatisches Ringsystem mit 6 bis 20 Kohlenstoffatomen ist, die wenigstens mit einer Hydroxylgruppe substituiert sind, und wobei "R" ein optional substituiertes zweiwertiges Radikal ist, das 6 bis 20 Atome in dem Strukturskelett und wenigstens ein Amid und/oder eine Estergruppe in dem Strukturskelett umfasst.

2. Zusammensetzung nach Anspruch 1, worin jedes "Ar" ein Benzolring oder ein kondensiertes aromatisches Ringsystem mit 6 bis 10 Kohlenstoffatomen ist, vorzugsweise ein Benzolring.

3. Zusammensetzung nach Anspruch 1 oder 2, worin der Benzolring oder das kondensierte aromatische Ringsystem mit wenigstens einer Hydroxylgruppe substituiert ist.

4. Zusammensetzung nach einem der Ansprüche 1 bis 3, worin die Hydroxylgruppe oder eine der Hydroxylgruppen an der para, oder 4-Stellung substituiert ist.

5. Zusammensetzung nach einem der vorhergehenden Ansprüche, worin jedes "Ar" unabhängig voneinander ein oder mehrere Substituenten tragen kann, vorzugsweise Alkylgruppen mit 1 bis 10 Kohlenstoffatomen, am meisten bevorzugt an einer Stellung oder an Stellungen, die zu der oder den Hydroxylgruppen benachbart sind.

6. Zusammensetzung nach einem der vorhergehenden Ansprüche, worin beide "Ar" 3,5-Dialkyl-4-hydroxyphenylgruppen sind, vorzugsweise 3,5-Di-tert-butyl-4-hydroxyphenylgruppen.

7. Zusammensetzung nach einem der vorhergehenden Ansprüche, worin das zweiwertige Radikal "R" durch die allgemeine Formel
∼∼∼[C(=O)X]ₙ∼∼∼ (II)
dargestellt wird, und wobei "C(=O)X" ein Amid oder eine Estergruppe darstellt, "X" ein Sauerstoff- oder Stickstoffatom ist, vorzugsweise eine Amidgruppe; und "n" die Anzahl derartiger Gruppen darstellt.

8. Zusammensetzung nach Anspruch 7, worin "n" von 1 bis 4 variiert.

9. Zusammensetzung nach Anspruch 7, worin "R" eine der Formeln
-R¹XC(=O)C(=O)XR¹- (III)
-R¹XC(=O)-R²-C(=O)XR¹- (IV)
-R¹C(=O)X-R²-XC(=O)R¹- (V),
und
-R¹XC(=O)-R²-XC(=O)R¹- (VI),
ist, wobei "R¹" eine C₁₋₄ Alkylengruppe ist, vorzugsweise eine Ethylengruppe "X" wie vorstehend definiert ist und "R²" eine organische Brückengruppe ist, die 1 bis 10 Atome in ihrem Strukturskelett aufweist oder eine substituierte organische Brückengruppe mit 1 bis 10 Atomen in ihrem Strukturskelett, wie eine C₁₋₁₀ Alkylengruppe, vorzugsweise eine n-Hexylengruppe, oder eine Gruppe die so lang ist, dass sie zwei Amidoder Estergruppen, vorzugsweise Amidgruppen in ihrer Brücke enthält.

10. Zusammensetzung nach Anspruch 1, worin der Zusatzstoff bis(3,5-Di-tert-butyl-4-hydroxyphenylethylamino)dicarbonsäureamid ist (erhältlich als MD-1024 von Ciba-Geigy).

11. Zusammensetzung nach einem der vorhergehenden Ansprüche, worin der Zusatzstoff in einer Menge im Bereich von 0,01 bis 5 Gewichts-%, basierend auf der gesamten bituminösen Zusammensetzung zugegeben wird.

12. Zusammensetzung nach einem der vorhergehenden Ansprüche, worin der bituminöse Bestandteil natürlich vorkommender Bitumen ist oder von einem Mineralöl abgeleitet ist.

13. Zusammensetzung nach einem der vorhergehenden Ansprüche, worin der bituminöse Bestandteil ausgewählt ist aus Destillationsbitumen, Fällungsbitumen, Oxidationsbitumen und Mischungen davon.

14. Zusammensetzung nach einem der vorhergehenden Ansprüche, worin der bituminöse Bestandteil eine Eindringtiefe im Bereich von 50 bis 250 dmm bei 25°C aufweist.

15. Zusammensetzung nach einem der vorhergehenden Ansprüche, worin das Blockcopolymer, das als elastomerer Bestandteil (B) verwendet wird, wenigstens zwei endständige Blöcke eines poly(monovinylaromatischen Kohlenwasserstoffs) und wenigstens einen Block eines oder mehrerer konjugierter Diene oder eine teilweise hydrierte Variante davon umfasst.

16. Zusammensetzung nach Anspruch 15, worin das konjugierte Dien ausgewählt ist aus denjenigen mit 4 bis 8 Kohlenstoffatomen pro Monomer, beispielsweise Butadien, 2-Methyl-1,3-butadien (Isopren), 2,3-Dimethyl-1,3-butadien, 1,3-Pentadien und 1,2-Hexadien, insbesondere Butadien und Isopren und Mischungen davon.

17. Zusammensetzung nach den Ansprüchen 15 oder 16, worin der monovinylaromatische Kohlenwasserstoff ausgewäht ist aus o-Methylstyrol, p-Methylstyrol, p-tert-Butylstyrol, 2,4-Dimethylstyrol, α-Methylstyrol, Vinylnaphthalin, Vinyltoluol, Vinylxylol und dergleichen oder Mischungen davon und insbesondere Styrol.

18. Zusammensetzung nach einem der Ansprüche 15 bis 17, worin das Blockcopolymer linear oder verzweigt, und symmetrisch oder asymmetrisch ist.

19. Zusammensetzung nach einem der Ansprüche 15 bis 18, worin der Gehalt der monovinylaromatischen Kohlenwasserstoffe des Endblockcopolymers geeigneterweise von 10 bis 70, bevorzugt von 20 bis 50 Gewichts-% variiert (basierend auf dem gesamten Blockcopolymer).

20. Zusammensetzung nach einem der Ansprüche 15 bis 19, worin die Polymerblöcke der monovinylaromatischen Kohlenwasserstoffe ("A") ein scheinbares Molekulargewicht im Bereich von 2.000 bis 100.000 insbesondere von 5.000 bis 50.000 aufweisen und die Polymerblöcke der konjugierten Diene ("B") ein scheinbares Molekulargewicht im Bereich von 25.000 bis 1.000.000 insbesondere von 30.000 bis 150.000 aufweisen.

21. Zusammensetzung nach einem der Ansprüche 15 bis 20, worin der Gesamtvinylgehalt des Blockcopolymers wenigstens 6 Gewichts-% (basierend auf den Blöcken des poly(konjugierten Diens)), vorzugsweise im Bereich von 8 bis 80, bevorzugt im Bereich von 25 bis 55 Gewichts-%.

22. Zusammensetzung nach einem der vorhergehenden Ansprüche, worin der Elastomerbestandteil (B) in der bituminösen Zusammensetzung in einer Menge im Bereich von 2 bis 20, bevorzugt von 10 bis 15 Gewichts-% (basierend auf der gesamten bituminösen Zusammensetzung) vorhanden ist.

23. Zusammensetzung nach einem der vorhergehenden Ansprüche, worin die bituminöse Zusammensetzung Füllstoffe enthält, beispielsweise Talk, Kalziumkarbonat und Ruß und/oder andere Bestandteile umfassend Harze, Öle, Stabilisatoren oder Flammschutzmittel.

24. Verwendung der Zusammensetzung nach einem der vorhergehenden Ansprüche im Dachbahnenbereich.

## Revendications

1. Composition bitumineuse, qui comprend un composant bitumineux (A), un composant d'élastomère (B), avantageusement un copolymère bloc d'un diène conjugué et d'un hydrocarbure monovinyl aromatique, et un additif (C), dans laquelle l'additif est un composé de la formule générale :
Ar―R―Ar (I)
dans laquelle chaque "Ar" représente indépendamment un noyau de benzène ou un système de noyaux aromatiques condensés de 6 à 20 atomes de carbone, substitué par au moins un groupe hydroxyle, et "R" est un radical divalent éventuellement substitué comprenant 6 à 20 atomes de carbone dans la colonne vertébrale et au moins un groupe amide et/ou ester dans la colonne vertébrale.

2. Composition suivant la revendication 1, dans laquelle chaque "Ar" est un noyau de benzène ou un système de noyaux aromatiques condensés de 6 à 10 atomes de carbone, avantageusement un noyau de benzène.

3. Composition l'une ou l'autre des revendications 1 et 2, dans laquelle le noyau de benzène ou le système de noyaux aromatiques condensés est substitué par au moins un groupe hydroxyle.

4. Composition suivant l'une quelconque des revendications 1 à 3, dans laquelle le groupe hydroxyle ou un des groupes hydroxyle est substitué en position para ou 4.

5. Composition suivant l'une quelconque des revendications précédentes, dans laquelle chaque "Ar" peut indépendamment comporter un ou plusieurs substituants, avantageusement des groupes alkyle de 1 à 10 atomes de carbone, plus avantageusement en une position ou des positions adjacentes au(x) groupe(s) hydroxyle.

6. Composition suivant l'une quelconque des revendications précédentes, dans laquelle les deux "Ar" sont des groupes 3,5-dialkyl-4-hydroxyphényle, avantageusement des groupes 3,5-di-tert-butyl-4-hydroxyphényle.

7. Composition suivant l'une quelconque des revendications précédentes, dans laquelle le radical divalent "R" est représenté par la formule générale :
∼∼∼[C(=O)X]ₙ∼∼∼ (II)
dans laquelle "C(=O)X" représente un groupe amide ou ester, "X" étant un atome d'oxygène ou d'azote, avantageusement un groupe amide, et "n" le nombre de ces groupes.

8. Composition suivant la revendication 7, dans laquelle "n" varie de 1 à 4.

9. Composition suivant la revendication 7, dans laquelle "R" est une des formules :
-R¹XC(=O)C(=O)XR¹- (III)
-R¹XC(=O)-R²-C(=O)XR¹- (IV)
-R¹C(=O)X-R²-XC(=O)R¹- (V),
et
-R¹XC(=O)-R²-XC(=O)R¹- (VI),
dans lesquelles "R¹" est un groupe hydrocarbonylène en C₁₋₄, avantageusement un groupe éthylène, "X" est tel que défini, et "R²" est un groupe de pontage organique de 1 à 10 atomes dans sa colonne vertébrale ou un groupe de pontage organique substitué de 1 à 10 atomes dans sa colonne vertébrale, tel qu'un groupe hydrocarbonylène en C_{1-10,} avantageusement un groupe n-hexylène, ou un groupe d'une telle longueur contenant deux groupes amide ou ester, avantageusement des groupes amide dans son pont.

10. Composition suivant la revendication 1, dans laquelle l'additif est l'amide d'acide bis(3,5-ditertbutyl-4-hydroxyphényléthylamino)dicarbonique (disponible sous la dénomination MD-1024 auprès de la société Ciba-Geigy).

11. Composition suivant l'une quelconque des revendications précédentes, dans laquelle l'additif est ajouté en une quantité allant de 0,01 à 5% en poids, par rapport à la composition bitumineuse totale.

12. Composition suivant l'une quelconque des revendications précédentes, dans laquelle le composant bitumineux est un bitume d'origine naturelle ou provenant d'une huile minérale.

13. Composition suivant l'une quelconque des revendications précédentes, dans laquelle le composant bitumineux est choisi parmi "les bitumes de distillation directe", les bitumes de précipitation, les bitumes soufflés et leurs mélanges.

14. Composition suivant l'une quelconque des revendications précédentes, dans laquelle le composant bitumineux a une pénétration allant de 50 à 250 dmm à 25°C.

15. Composition suivant l'une quelconque des revendications précédentes, dans laquelle le copolymère bloc utilisé comme composant d'élastomère (B) comprend au moins deux blocs terminaux d'un poly(hydrocarbure monovinyl aromatique) et au moins un bloc d'un ou plusieurs diènes conjugués ou d'une version hydrogénée (partiellement) de ceux-ci.

16. Composition suivant la revendication 15, dans laquelle le diène conjugué est choisi parmi ceux comportant de 4 à 8 atomes de carbone par monomère, par exemple le butadiène, le 2-méthyl-1,3-butadiène (isoprène), le 2,3-diméthyl-1,3-butadiène, le 1,3-pentadiène et le 1,2-hexadiène, en particulier le butadiène et l'isoprène, et leurs mélanges.

17. Composition suivant l'une ou l'autre des revendications 15 et 16, dans laquelle l'hydrocarbure monovinyl aromatique est choisi parmi l'o-méthyl styrène, le p-méthyl styrène, le p-tert-butylstyrène, le 2,4-diméthyl styrène, l'α-méthyl styrène, le vinyl naphtalène, le vinyl toluène, le vinyl xylène, et analogue ou leurs mélanges, et en particulier le styrène.

18. Composition suivant l'une quelconque des revendications 15 à 17, dans laquelle le copolymère bloc est linéaire ou ramifié, et symétrique ou asymétrique.

19. Composition suivant l'une quelconque des revendications 15 à 18, dans laquelle la teneur en hydrocarbures monovinyl aromatiques du copolymère bloc final est d'une façon appropriée de 10 à 70, plus avantageusement de 20 à 50% en poids (par rapport au copolymère bloc total).

20. Composition suivant l'une quelconque des revendications 15 à 19, dans laquelle les blocs de polymère d'hydrocarbures monovinyl aromatiques ("A") ont un poids moléculaire apparent allant de 2000 à 100.000, en particulier de 5000 à 50.000, et les blocs de polymère de diènes conjugués ("B") ont un poids moléculaire apparent allant de 25.000 à 1.000.000, en particulier de 30.000 à 150.000.

21. Composition suivant l'une quelconque des revendications 15 à 20, dans laquelle la teneur en vinyle totale du copolymère bloc est d'au moins 6% en poids [par rapport aux blocs de poly(diène conjugué)], avantageusement de 8 à 80, plus avantageusement de 25 à 55% en poids.

22. Composition suivant l'une quelconque des revendications précédentes, dans laquelle le composant d'élastomère (B) est présent dans la composition bitumineuse en une quantité allant de 2 à 20, plus avantageusement de 10 à 15% en poids (par rapport à la composition bitumineuse totale).

23. Composition suivant l'une quelconque des revendications précédentes, dans laquelle la composition bitumineuse contient des charges, par exemple du talc, du carbonate de calcium et du noir de carbone, et/ou d'autres composants et notamment des résines, des huiles, des stabilisants ou des retardateurs de flamme.

24. Utilisation de la composition suivant l'une quelconque des revendications précédentes, dans des applications d'étanchéité.
